# DEMANDE DE BREVET EUROPEEN

(11) **EP 2 626 530 A1**
(43) Date de publication de la demande: **14.08.2013**
(21) Numéro de dépôt: 13151912.6
(22) Date de dépôt: 18.01.2013
(51) Int. Cl.: F01N 3/20

(54) **Reservoir de stockage de reducteur gazeux pour la reduction catalytique selective des oxydes d'azote**

(30) Priorité: 10.02.2012 FR 1251260
(71) Demandeur: PEUGEOT CITROËN AUTOMOBILES SA, 78140 Velizy-Villacoublay (FR)
(72) Inventeur: Bozian, Mohamed, 95170 DEUIL LA BARRE (FR); Barre Pain Mireille, 77500 CHELLES (FR)

(57) **Abrégé**

L'invention a pour objet un réservoir (1) de stockage de réducteur gazeux pour la réduction catalytique sélective des oxydes d'azote, ledit réservoir étant associé à au moins un moyen de chauffage (2a) du matériau de stockage. Le réservoir contient au moins deux matériaux (3,4) de stockage solides dudit réducteur gazeux, chacun des matériaux présentant des températures de désorption du réducteur gazeux différentes, les matériaux de stockage (3,4) étant disposés d'autant plus près du moyen de chauffage que leur température de désorption est élevée.

## Description

L'invention est relative à la dépollution des gaz d'échappement d'un moteur à combustion. Plus précisément, elle porte sur la réduction des oxydes d'azote contenus dans les gaz d'échappement d'un moteur à combustion interne par réduction catalytique sélective (ou SCR, selon l'acronyme anglophone de « Selective Catalytic Reduction »).

L'invention s'intéresse plus particulièrement à la dépollution des gaz d'échappement des moteurs de véhicules, notamment de véhicules automobiles.

La technologie de réduction des oxydes d'azote par réduction catalytique sélective consiste à réduire les oxydes d'azote avant leur sortie du circuit d'échappement d'un moteur à combustion, à l'aide d'un agent réducteur (ou d'un précurseur d'agent réducteur) introduit dans la ligne d'échappement. Dans la suite du présent texte, on emploiera indifféremment le terme de réducteur pour désigner l'agent réducteur ou un précurseur de l'agent réducteur.

On connaît deux types de technologie SCR. Il existe la technologie dite SCR liquide, qui utilise un précurseur d'agent réducteur sous forme liquide, comme une solution aqueuse d'urée, susceptible de se transformer en ammoniac quand elle est injectée dans la ligne d'échappement. Il existe aussi la technologie dite SCR solide/gaz, où l'ammoniac est stockée dans un matériau solide susceptible de l'adsorber/de l'adsorber puis de le relarguer de façon contrôlée, notamment par activation thermique.

L'invention s'intéresse à la technologie SCR solide/gaz, et plus particulièrement aux réservoirs de matériau solide absorbant/adsorbant du réducteur, matériau qui sera désigné dans la suite du présent texte par le terme « matériau de stockage » par soucis de concision.

A titre d'exemple, le document WO 2011/119735 décrit un tel réservoir, sous forme d'une cartouche dans laquelle on vient insérer des disques tous identiques entre eux et empilés les uns sur les autres, chaque disque étant constitué du matériau de stockage, à base de chlorure de strontium sous forme de poudre pressée, qui est recouvert, sur au moins une des faces du disque, d'un revêtement conducteur. Il est également prévu un moyen de chauffage de la cartouche, la chaleur étant transmise au sein du matériau de stockage au moins en partie via ces revêtements conducteurs, afin qu'il désorbe de l'ammoniac gazeux.

Cette conception de cartouche reste susceptible d'améliorations. En effet, la chaleur se propage de la source extérieure de chaleur aux revêtements conducteurs, mais il s'avère que le temps de relargage d'une quantité donnée d'agent réducteur n'est pas constant dans le temps au fur et à mesure de l'épuisement du matériau de stockage (on comprend par épuisement le fait que le matériau de stockage s'appauvrit de plus en plus en réducteur). En effet, quand la cartouche est neuve, et le matériau de stockage chargé à son taux maximal en agent réducteur, ce sont d'abord les strates du matériau de stockage les plus proches de la source de chaleur et/ou les strates en contact direct avec les revêtements conducteurs des disques qui relarguent l'agent réducteur. Puis, de façon progressive, la chaleur doit parcourir une distance plus grande pour atteindre les strates de plus en plus éloignées de matériau de stockage, sachant que la chaleur se propage mal dans l'épaisseur du matériau de stockage, ce matériau de type sel étant faiblement conducteur thermique. Or cette inertie grandissante dans le relargage en agent réducteur de la cartouche, au fur et à mesure de son usure, à apport thermique donné, n'est pas facile à compenser, fait augmenter la consommation électrique quand les moyens de chauffage sont des résistances chauffantes, et peut aboutir à des dérives dans le procédé d'injection d'agent réducteur au moment approprié en quantités appropriées dans la ligne d'échappement.

L'invention a alors pour but de mettre au point un nouveau type de réservoir de stockage qui remédie à cet inconvénient, et qui puisse permettre d'obtenir un taux de relargage d'agent réducteur plus uniforme, moins variable dans le temps, et, notamment, qui diminue pas/peu au fur et à mesure de l'usure de la cartouche, à conditions d'activation identiques ou analogues.

L'invention a tout d'abord pour objet un réservoir de stockage de réducteur gazeux pour la réduction catalytique sélective des oxydes d'azote, ledit réservoir étant associé à au moins un moyen de chauffage du matériau de stockage. Ledit réservoir contient au moins deux matériaux de stockage solides dudit réducteur gazeux, chacun des matériaux présentant des températures de désorption du réducteur gazeux différentes, les matériaux de stockage étant disposés d'autant plus près du moyen de chauffage que leur température de désorption est élevée.

On comprend au sens de l'invention par température de désorption la température que le matériau doit atteindre pour désorber la première molécule de réducteur gazeux. Par exemple, si on prend un matériau de stockage en chlorure de baryum, qui peut adsorber huit moles d'agent réducteur sous forme d'ammoniac par mole de baryum avec la formule chimique BaCl₂(NH₃)₈, la température d'adsorption est celle qui permet de libérer la première mole d'ammoniac sur les huit. La température de désorption des moles d'ammoniac au-delà de la première, et notamment pour la dernière, peut être plus élevée.

A noter que cette propriété de température de désorption est corrélée à l'énergie d'activation de désorption du réducteur gazeux, propriété qui se mesure en joule et qui correspond à l'énergie à fournir au matériau de stockage pour libérer le réducteur gazeux ; Et comme pour la température d'adsorption, cette énergie d'activation est considérée comme celle nécessaire pour la désorption de la première mole d'ammoniac, si on garde l'exemple du chlorure de baryum, sachant que l'énergie pour libérer les moles suivantes peut être plus élevée.

En combinant ainsi deux matériaux aux propriétés thermochimiques différentes, on peut parvenir à obtenir un taux de relargage d'agent réducteur beaucoup plus uniforme tout au long de la durée de vie du réservoir. En effet, la chaleur apportée par le moyen de chauffage va « profiter » d'abord au matériau le plus proche de la source de chaleur, qui est celui qui en a le plus besoin pour relarguer l'agent réducteur, puisque c'est celui qui présente la température de désorption la plus élevée. (On utilisera indifféremment dans le présent texte les termes de relargage et désorption, visant le même phénomène de libération de l'agent réducteur par le matériau solide). Ensuite, ou en parallèle, l'autre matériau, qui nécessite moins - voire pas ou très peu - d'apport de chaleur pour relarguer le gaz réducteur, va s'appauvrir lui aussi en agent réducteur. On stabilise ainsi grandement le temps de montée en pression du réservoir (qui est le temps nécessaire pour que le réservoir puisse libérer la quantité de gaz voulue), pour tous les états de chargement du réservoir, et on diminue la consommation électrique des moyens de chauffage quand le réservoir est proche de son taux de charge minimal nécessitant une recharge (Dans le présent texte, charge et recharge visent la quantité de gaz réducteur adsorbé par le matériau de stockage).

Selon un mode de réalisation, le moyen de chauffage est inséré au moins en partie dans le réservoir, notamment sous forme d'un barreau chauffant. On dit qu'il est interne.

Dans ce cas, de préférence, le réservoir contient au moins deux matériaux présentant des températures de désorption du réducteur gazeux différentes qui sont disposés substantiellement concentriquement autour du moyen de chauffage. Si la cartouche est de section substantiellement circulaire ou ovale, on a alors une succession d'anneaux ayant la hauteur de la cartouche, insérés les uns dans les autres, le plus central présentant aussi une ouverture centrale pour y loger le moyen de chauffage, notamment du type barreau chauffant, éventuellement par l'intermédiaire d'une gaine conductrice.

Selon un autre mode de réalisation, le moyen de chauffage est périphérique et entoure au moins en partie l'enveloppe extérieure du réservoir. Les parois du réservoir sont de préférence très conductrices (en métal) afin de bien propager par conduction la chaleur émise par le moyen de chauffage à l'intérieur du réservoir.

Dans ce cas, de préférence, le réservoir contient au moins deux matériaux présentant des températures de désorption du réducteur gazeux différentes, disposés de façon à ce que celui ayant la température de désorption la plus élevée soit concentré dans la région contiguë au moyen de chauffage. Ainsi, si le moyen de chauffage entoure toute l'enveloppe extérieure du réservoir, qui est de section circulaire ou ovale, les matériaux sont sous forme d'anneaux concentriques, sauf le plus central qui peut être sous forme d'un disque plein, contrairement au cas précédent. Si le moyen de chauffage ne couvre qu'une portion du réservoir, par exemple 50% de sa circonférence, les matériaux peuvent par exemple être sous forme de deux demi cylindres associés. Si le moyen de chauffage couvre, par exemple, une portion inférieure à 50%, les matériaux peuvent avoir des formes complémentaires plus complexes.

De préférence, le moyen de chauffage est une résistance chauffante alimentée par une source d'électricité sous commande de moyens électroniques/informatiques.

Les matériaux présentant des températures de désorption du réducteur gazeux différentes peuvent avoir des interfaces nettes. Ces interfaces peuvent aussi être diffuses, en ce sens qu'entre les deux types de matériau existe une zone de transition avec un gradient de composition.

Selon une variante préférée, les matériaux présentant des températures de désorption du réducteur gazeux différentes sont cloisonnés les uns par rapport aux autres, notamment par un film de matériau conducteur.

Il est également possible qu'au sein d'un même matériau de température de désorption donnée, le matériau soit configuré en pastilles de poudre compactée et encapsulées au moins en partie par un film conducteur, du type film métallique.

A titre d'exemple, le matériau présentant des températures de désorption du réducteur gazeux les plus basses peut être à base de chlorure de baryum.

Et le matériau présentant des températures de désorption du réducteur gazeux les plus élevées, peut être choisi parmi les sels, et notamment les chlorures, de calcium ou de strontium ou leur mélange ou encore de magnésium, de nickel ou de manganèse.

L'invention a également pour objet le procédé de remplissage d'un tel réservoir, où l'on conforme chacun des matériaux de stockage, notamment sous forme de poudre, avant de les insérer dans le réservoir.

En outre, et de façon connue, il peut être prévu une ou plusieurs étapes consistant à compresser le/chaque matériau de stockage qui peut se présenter initialement sous forme pulvérulente.

Il est aussi prévu, mais cette étape est connue et non détaillée ici, une étape consistant à faire absorber/adsorber une quantité prédéfinie d'agent réducteur par chacun des matériaux de stockage.

Comme évoqué plus haut, le procédé peut aussi comprendre la fabrication de pastilles de chacun des matériaux, pastilles qui sont ensuite assemblées/conformées ensemble. Les pastilles peuvent être équipées de moyens de détrompage (par exemple, couleur du film d'encapsulage de la pastille ou du matériau de stockage lui-même, ou encore positionnement du matériau de stockage dans le réservoir, ou tout moyen de type encoche...) pour identifier sans erreur quel type de matériau de stockage elles contiennent.

L'invention a également pour objet le module de stockage de réducteur gazeux dans un matériau solide, qui comprend au moins un réservoir associé à un moyen de chauffage tel que décrit précédemment, et au moins un moyen de commande du moyen de chauffage. Généralement, l'ensemble de ces composants est fixé directement ou indirectement sur un bâti de ce module, et éventuellement protégé par un carter, le module étant ensuite implanté sous le véhicule de façon à rendre possible le remplacement des réservoirs une fois déchargés en agent réducteur.

L'invention concerne aussi le dispositif de réduction des oxydes d'azote contenus dans les gaz d'échappement d'un moteur à combustion interne, qui intègre le module décrit plus haut, ainsi que, par exemple, d'autres organes comme un organe doseur, un organe injecteur pour injecter le gaz réducteur dans la ligne d'échappement, et d'autres moyens du type conduites, vannes, capteurs de pression et/ou de température appropriés.

L'invention a également pour objet tout véhicule notamment automobile équipé d'un module ou d'un dispositif tels que décrits plus haut.

D'autres caractéristiques et avantages de l'invention apparaîtront à la lecture de la description détaillée qui suit d'un mode de réalisation de l'invention, donné à titre d'exemple uniquement, en référence aux figures schématiques suivantes:
- figure 1, une cartouche selon un premier mode de réalisation de l'invention, selon une vue en éclaté,
- figure 2, une section perpendiculaire à son axe longitudinal de la cartouche selon la figure 1,
- figure 3, une cartouche selon un deuxième mode de réalisation de l'invention, selon une vue en éclaté,
- figure 4a, 4b, 4c, une section perpendiculaire à son axe longitudinal de la cartouche selon la figure 3, selon trois variantes.

Ces figures sont extrêmement schématiques, et les différents composants représentés ne respectent pas forcément l'échelle afin d'en faciliter la lecture. Seuls des composants qui importent dans le cadre de l'invention sont en outre représentés. Les mêmes composants gardent les mêmes références d'une figure à l'autre.

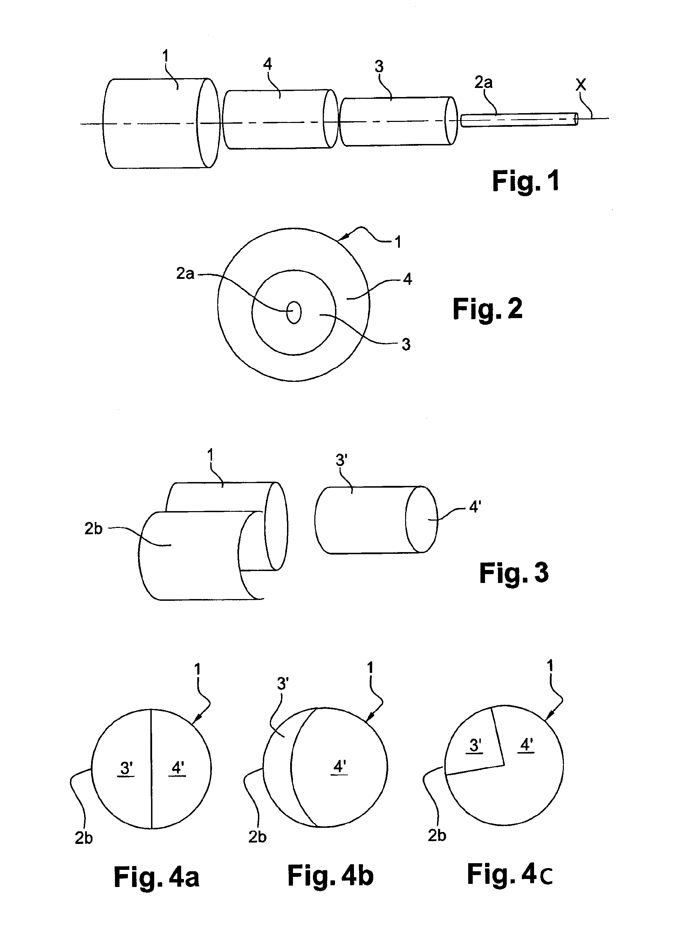

La figure 1 représente un premier mode de réalisation de l'invention, avec une cartouche 1 (cartouche et réservoir ont le même sens dans le présent texte), avec une enveloppe extérieure métallique définissant un volume sensiblement cylindrique (à section circulaire ou ovale). A l'intérieur de cette enveloppe, sont disposés trois types de matériaux de façon concentrique, tous centrés sur l'axe longitudinal X de la cartouche : au centre, on a le barreau chauffant 2a, disposé dans la cartouche, avec un prolongement sous forme d'embout hors de la cartouche une fois inséré, embout qui permet sa préhension d'une part et son alimentation en électricité d'autre part (non représenté). Ce barreau est métallique, chauffe par effet Joule, et peut éventuellement être inséré dans une gaine elle-même métallique pouvant rester ou non à demeure dans la cartouche 1.

Comme également représenté à la figure 2, autour du barreau chauffant, on a un premier anneau de matériau de stockage d'ammoniac 3, puis un second anneau d'un autre matériau de stockage d'ammoniac 4 disposé autour du premier, soit en contact direct, soit par l'intermédiaire d'un film conducteur, par exemple un film d'aluminium. On peut aussi prévoir trois matériaux de stockage différents, ou plus, disposés ainsi sous forme d'anneaux concentriques. On peut aussi adapter la configuration de ces différents anneaux en fonction de la forme de la section de la cartouche. Ainsi, la cartouche peut avoir une section ovale, ou se rapprocher d'une section carrée aux bords arrondis, la forme des anneaux s'adaptant alors à ces différentes sections.

On choisit ici, à titre d'exemple, le matériau 3 en chlorure de strontium (aussi appelé communément sel d'Adammine, de formule SrCl₂(NH₃)₈ quand il est saturé en ammoniac, et le matériau 4 en chlorure de baryum, de formule BaCl₂(NH₃)₈ quand il est saturé en ammoniac, le chlorure de strontium présente une température de désorption en ammoniac de 35°C, alors que le chlorure de baryum présente une température de désorption en ammoniac inférieure, et notamment aux alentours de la température ambiante. Le matériau 3 doit être activé thermiquement à plus haute température que le matériau 4 pour relarguer de l'ammoniac, il est donc, selon l'invention, plus proche de la source de chaleur 2a.

On peut aussi considérer non pas la température de désorption, mais l'énergie d'activation de désorption, qui évolue de la même manière. Ainsi, l'énergie d'activation pour libérer une mole ammoniac du chlorure de baryum est de 39 kilo Joules, valeur identique pour libérer l'ensemble des huit moles d'ammoniac, alors que l'énergie d'activation pour le chlorure de strontium est de 41 k Joules pour libérer les sept premières moles d'ammoniac, et de 48 kilo Joules pour libérer la huitième mole d'ammoniac. L'énergie d'activation pour le chlorure de baryum est donc bien inférieure à celle du chlorure de strontium, tout comme leurs températures de désorption respectives.

Il est aussi intéressant de comparer les pressions de vapeur d'ammoniac à température ambiante : ainsi, la pression de vapeur à température ambiante est pour le chlorure de baryum chargé en ammoniac de 1,85 bar, soit 1,85. 10⁵ Pa, alors que la pression de vapeur à température ambiante est pour le chlorure de strontium chargé en ammoniac de 0,0554 bar, soit 0,0554.10⁵ Pa, ce paramètre étant également corrélé aux précédents : plus cette pression est grande, comme celle du sel de baryum chargé en ammoniac, et plus il libère facilement l'ammoniac, et plus l'énergie d'activation et la température de désorption sont faibles. Donc ici, le matériau qui la plus grande température d'adsorption (le chlorure de strontium) a également la plus faible pression en ammoniac, et inversement.

La figure 3 concerne un autre mode de réalisation, avec la même cartouche 1 qui est munie cette fois d'un moyen de chauffage externe, périphérique 2b, sous forme d'un réseau de fils chauffants (métalliques) montés sur une ossature métallique et alimentés en électricité sous commande de moyens de pilotage informatiques/électroniques comme dans le mode de réalisation précédent. Ici, le moyen de chauffage 2b entoure la moitié de la circonférence de la cartouche 1. Dans le cas représenté aussi à la figure 4a, on voit alors qu'on a une répartition des matériaux de stockage en deux demi cylindres, le demi cylindre 3', de même nature chimique que le matériau 3, en regard du moyen de chauffage 2b, et le demi cylindre 4', de même nature chimique que le matériau 4 précédent, qui vient compléter le cylindre. La jonction entre les deux demi cylindres peut être directe, ou, de préférence, se faire via un film conducteur tel qu'un film métallique du type aluminium. Une variante consiste, comme représenté en figure 4b, à ce que les deux types de matériau se répartissent selon une ligne de jonction, en coupe transversale, qui est courbe avec par exemple une concavité tournée vers le moyen de chauffage 2b.

Le moyen de chauffage 2b peut couvrir plus ou moins de la moitié de la circonférence de la cartouche, même si, de préférence, il est présent sur substantiellement toute sa longueur. Il peut donc tout aussi bien entourer que le ¹/₄ ou le 1/3 de cette circonférence : la figure 4c correspond à un exemple où le moyen de chauffage 2b couvre le quart de la circonférence de la cartouche 1. On a alors une répartition angulaire des deux matériaux, le matériau 3' en regard du moyen du moyen de chauffage avec une ouverture angulaire de 90°, et le complément pour obtenir la forme d'un cylindre par le matériau 4'.

Si le moyen de chauffage 2b entoure complètement la cartouche, on peut alors avoir un matériau 3' annulaire en regard du moyen de chauffage, à l'intérieur duquel est disposé un cylindre du matériau 4'.

Beaucoup de variantes sont possibles, notamment en utilisant non pas deux mais trois ou plus matériaux de stockage différents. On peut aussi moduler la proportion entre les différents matériaux de stockage utilisés, en choisissant, en proportions pondérales, par exemple une proportion allant de 80/20 à 20/80, et notamment entre 40/60 et 60/40 entre les deux matériaux quand il y en a deux seulement.

Il a été constaté qu'avec les deux modes de réalisation proposés, on obtient un relargage plus uniforme dans le temps d'ammoniac à conditions d'activation thermiques identiques : la cartouche vieillit mieux, se vide plus régulièrement. Les montées en pression à chaque activation thermique sont plus uniformes. La consommation énergétique des moyens de chauffage est plus uniforme, et n'augmente pas avec le temps autant qu'avec les solutions antérieures n'utilisant qu'un type de sel.

En ce qui concerne le choix des matériaux de stockage, on a vu que le paramètre thermochimique important à considérer est la température de désorption de l'ammoniac ; plus elle est élevée, plus il faudra chauffer le matériau, plus on le disposera près de la source de chaleur. D'autres caractéristiques physico-chimiques sont aussi utiles à considérer pour choisir les matériaux, et notamment :
- la pression de vapeur en ammoniac, à température ambiante (à 25°C par exemple), car on a intérêt à choisir une pression de vapeur relativement élevée.
- la capacité de stockage d'ammoniac, car, naturellement, on a intérêt à choisir le sel qui peut stoker le plus d'ammoniac,
- la conductivité thermique, car les sels ne sont pas de bons conducteurs thermiques, mais on a intérêt à choisir celui qui a une conductivité plus forte, même modeste, que les autres, pour faciliter la diffusion de la chaleur dans le matériau.

Ainsi, le chlorure de baryum est intéressant, car il a non seulement une température de désorption d'ammoniac peu élevée proche de la température ambiante, mais aussi une pression de vapeur appropriée en ammoniac de 1,85 bar à 25°C. Il peut donc jouer de façon adéquate le rôle de matériau le plus réactif. Il est particulièrement intéressant de l'associer dans la cartouche avec un matériau moins réactif, présentant notamment une pression de vapeur en ammoniac moins élevée, car ainsi la cartouche n'est pas sous pression significative en permanence.

Les chlorures de calcium et de strontium seront plutôt sélectionnés pour jouer le rôle du matériau le moins réactif à disposer au plus près des moyens de chauffage : le chlorure de calcium présente une température de désorption en ammoniac de 32°C et une pression de vapeur en ammoniac à 25°C de 0,627 bar (soit 0,627. 10⁵ Pa), le chlorure de strontium présente une température de désorption en ammoniac de 35° C et une pression de vapeur en ammoniac à 25°C de 0,554 bar (soit 0,554. 10⁵ Pa).

D'autres sels possibles pour jouer l'un ou l'autre de ces rôles sont le chlorure de nickel, de manganèse, ou de magnésium.

Tous les chlorures mentionnés ont une capacité de stockage d'ammoniac élevée, d'au moins 599 grammes d'ammoniac par litre : 599 pour le chlorure de magnésium Mg(NH₃)₆Cl₂, 600 pour le chlorure de calcium Ca(NH₃)₈Cl₂ et de strontium Sr(NH₃)₈Cl₂, 633 pour le chlorure de baryum Ba(NH₃)₈Cl₂, 631 pour le chlorure de manganèse Mn(NH₃)₆Cl₂ et 673 pour le chlorure de nickel Ni(NH₃)₆Cl₂.

Pour Ca(NH₃)₈Cl₂, la température de désorption est de 32°C, et la température d'activation est de 42 kilo Joules pour les six premières moles d'ammoniac, 63 kilo Joules pour la septième et 69 kilo Joules pour la huitième, et la pression d'ammoniac à température ambiante est de 0,627 bar, soit 0,627.10⁵ Pa.

On peut aussi envisager de mélanger deux sels différents pour constituer un matériau au sens de l'invention.

De façon connue, la cartouche peut également intégrer en outre au moins un dispositif parmi : un filtre qui évite le passage de matériau de stockage vers l'extérieur de la cartouche, un dispositif de dosage du réducteur, un clapet anti-retour, un embout de connexion, un dispositif d'étanchéité des connexions.

## Revendications

1. Réservoir (1) de stockage de réducteur gazeux pour la réduction catalytique sélective des oxydes d'azote, ledit réservoir étant associé à au moins un moyen de chauffage (2a,2b) du matériau de stockage, **caractérisé en ce que** ledit réservoir contient au moins deux matériaux (3,4,3',4') de stockage solides dudit réducteur gazeux, chacun des matériaux présentant des températures de désorption du réducteur gazeux différentes, les matériaux de stockage (3,4,3',4') étant disposés d'autant plus près du moyen de chauffage que leur température de désorption est élevée.

2. Réservoir (1) selon la revendication précédente, **caractérisé en ce que** le moyen de chauffage (2a) est inséré au moins en partie dans le réservoir, notamment sous forme d'un barreau chauffant.

3. Réservoir (1) selon la revendication précédente, **caractérisé en ce qu'**il contient au moins deux matériaux (3,4,3',4') présentant des températures de désorption du réducteur gazeux différentes qui sont disposés substantiellement concentriquement autour du moyen de chauffage.

4. Réservoir (1) selon la revendication 1, **caractérisé en ce que** le moyen de chauffage (2b) est périphérique et entoure au moins en partie l'enveloppe extérieure du réservoir.

5. Réservoir (1) selon la revendication précédente, **caractérisé en ce qu'**il contient au moins deux matériaux (3,4,3',4') présentant des températures de désorption du réducteur gazeux différentes, disposés de façon à ce que celui ayant la température de désorption la plus élevée soit concentré dans la région contiguë au moyen de chauffage.

6. Réservoir (1) selon l'une des revendications précédentes, **caractérisé en ce que** les matériaux (3,4,3',4') présentant des températures de désorption du réducteur gazeux différentes ont des interfaces nettes ou diffuses.

7. Réservoir (1) selon l'une des revendications 1 à 5, **caractérisé en ce que** les matériaux (3,4,3',4') présentant des températures de désorption du réducteur gazeux différentes sont cloisonnés les uns par rapport aux autres, notamment par un film de matériau conducteur.

8. Réservoir (1) selon l'une des revendications précédentes, **caractérisé en ce que** le matériau présentant des températures de désorption du réducteur gazeux les plus basses est à base de chlorure de baryum.

9. Réservoir (1) selon l'une des revendications précédentes, **caractérisé en ce que** le matériau présentant des températures de désorption du réducteur gazeux les plus élevées, est choisi parmi les sels, et notamment les chlorures, de calcium, de strontium, de magnésium, de nickel, de manganèse ou leur mélange.

10. Procédé de remplissage d'un réservoir (1) selon l'une des revendications précédentes, **caractérisé en ce qu'**on conforme chacun des matériaux de stockage (3,4,3',4'), notamment sous forme de poudre compactée, avant de les insérer dans le réservoir (1).

11. Module de stockage de réducteur gazeux dans un matériau solide, **caractérisé en ce qu'**il comprend au moins un réservoir associé à un moyen de chauffage selon l'une des revendications 1 à 9, et au moins un moyen de commande du moyen de chauffage.
